# EUROPEAN PATENT APPLICATION

(11) **EP 0 793 057 A2**
(43) Date of publication of application: **03.09.1997**
(21) Application number: 97300184.5
(22) Date of filing: 14.01.1997
(51) Int. Cl.: F23D 14/32, F23D 14/78

(54) **Oxy-fuel burner**

(30) Priority: 27.02.1996 GB 9604067
(71) Applicant: The BOC Group plc, Windlesham Surrey GU20 6HJ (GB)
(72) Inventor: Gredley, Paul Andrew, Ravenshead, Nottingham NG15 9AU (GB)
(74) Representative: Gough, Peter

(57) **Abstract**

An oxy-fuel burner 2 includes a body 4 having an inlet 14 for fuel gas and an inlet 24 for oxygen. The body 2 includes at its distal end a nozzle arrangement for the passage therethrough of the gases. The nozzle arrangement includes at least two aperture plates 16, 20 at least one aperture plate 16 being rotatable relative to the remaining plate 20 for altering the configuration of the flame emanating from the burner 2 when in use.

## Description

The present invention relates to oxy-fuel burners.

Oxy-fuel burners are used in furnaces for the melting, for example, of scrap metal. Such burners conventionally include an elongate body provided with a water jacket for cooling purposes and in which is located a carrier tube connected to a fuel gas supply. An oxygen gas inlet is formed in the housing and, when in use, both the fuel gas and the oxygen are directed towards the distal end of the burner where they pass through a nozzle prior to entering the interior of a furnace.

During the melt down of scrap metal, it is often desirable to have a relatively bushy broad flame extending from a burner to melt down evenly the scrap at the beginning of a heating cycle and latterly an intense thin pencil-like flame once the scrap is in a molten state in order to stir the molten material.

With conventional burners it is not possible to alter the flame configuration during a heating cycle.

It is an aim of the present invention to provide an oxy-fuel burner which will allow an operator to alter the flame configuration emanating from a burner during use.

For the avoidance of doubt the terms "oxygen" or "oxygen gas" used throughout this specification are intended to embrace gas mixtures including oxygen suitable for use with oxy-fuel burners.

According to the present invention, an oxy-fuel burner comprising a body having an inlet for fuel gas and an inlet for oxygen, the body also including at a distal end a nozzle arrangement for the passage therethrough of the gases, the nozzle arrangement including at least two apertured plates, at least one apertured plate being rotatable relative to the remaining plate(s) for altering the configuration of flame emanating from the burner when in use.

Preferably, a carrier tube is located within and mounted for limited rotational movement relative to the body, the rotatable apertured plate being connected for rotational movement with the carrier tube.

Preferably, there are two plates and the static plate is rigidly connected to the distal end of the body.

An embodiment of the invention will now be described, by way of example, reference being made to the Figures of the accompanying diagrammatic drawings in which:-
Figure 1 is a schematic cross-sectional view through an electric arc furnace;
Figure 2 is a perspective cross-sectional view of an oxy-fuel burner;
Figures 3 and 4 are end views of plates forming part of a nozzle assembly forming part of the burner of Figure 2; and
Figures 5 and 6 illustrate different relative positions of the plates illustrated in Figures 3 and 4.

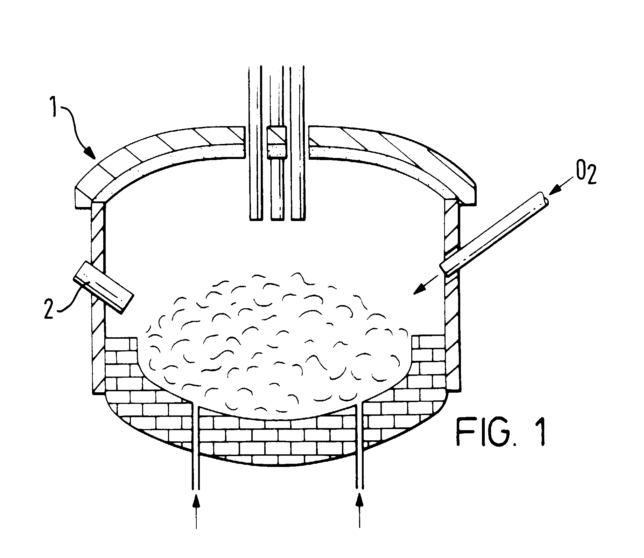

Referring first to Figure 1, this illustrates a conventional electric arc furnace 1 for melting material such as scrap metal. Oxy-fuel burners 2 (only one shown) are provided at pre-selected locations around the furnace wall and are orientated to direct a flame downwardly towards any metal to be melted.

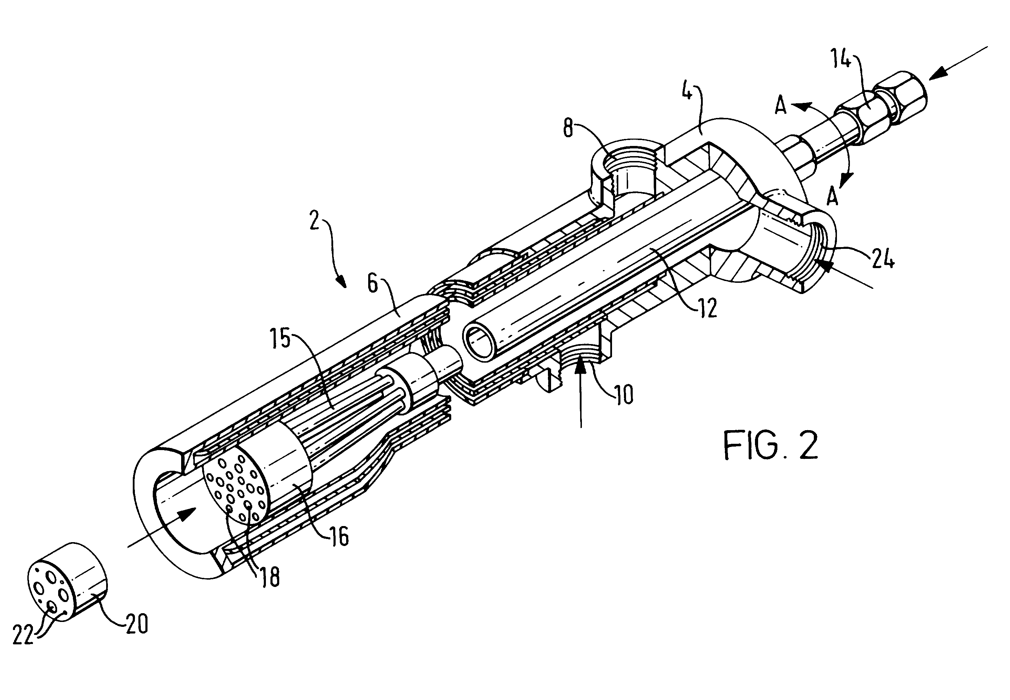

Referring now to Figure 2, the burner 2 comprises a hollow body 4 provided with a coolant jacket 6 for flow therethrough of a coolant from an inlet 8 to a coolant outlet 10.

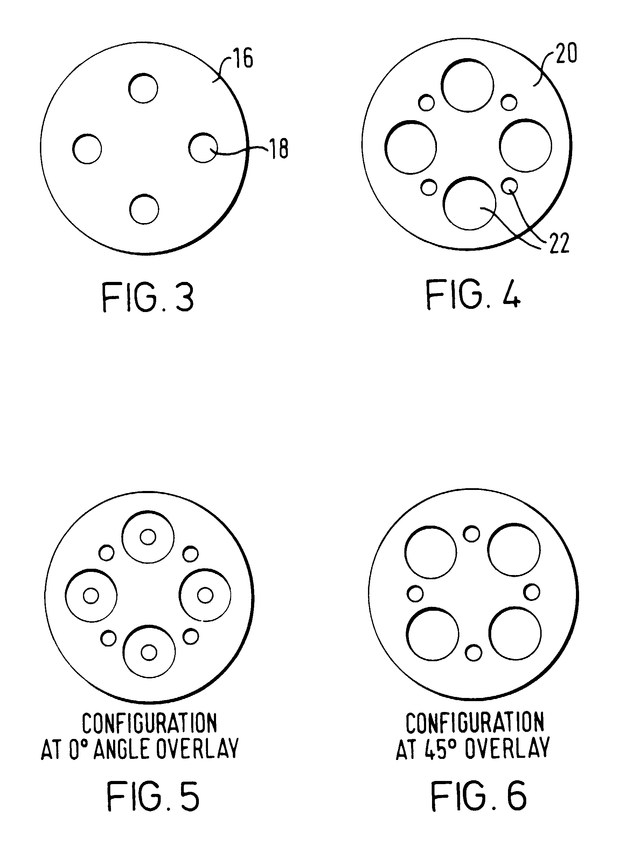

A carrier tube 12 is located within the body 4 but a portion extends through the proximal end of the body 4 to form a fuel gas inlet 14 for connection to a fuel gas line. The carrier tube 12 is mounted within the body 4 such that it is capable of limited rotational movement as indicated by arrows A A. The distal end of the carrier tube 12 communicates with a plurality of individual tubes 15 which terminate in associated through holes 18 in a first plate 16 (see also Figure 3). As well as providing passageways between the carrier tube 12 and the plate 16 for the fuel gas, the tubes 15 effectively attach the first plate 16 to the carrier tube 12 for rotational movement therewith.

The first plate 16 forms part of a nozzle arrangement located at the distal end of the body 4, together with a second plate 20 which is rigidly attached to the proximal end of the body 4 (to the left of plate 16 as shown in Figure 2). Plate 20 is also provided with a plurality of through holes 22 (see Figure 4) and as previously stated the plates 16, 20 defined together a nozzle arrangement.

The body 4 also includes, adjacent its proximal end, an inlet 24 for oxygen in a manner known per se.

In use, the fuel gas and oxygen will be delivered under pressure to the burner 2 and will enter the body 4 by their respective inlets 14, 24. The fuel gas will pass down the carrier tube 12, enter the tubes 15 and pass through the holes 18, 22 in the plates 16, 20. Likewise the oxygen will pass along the interior of the body 4 along the outside of the carrier tube 12 and will pass through holes 18 and 22 in the first and second plates 16, 20.

If a bushy flame for melt down of scrap material early on in the heating cycle of the furnace is required, then that part of the carrier tube 12 extending outwardly from the proximal end of the body 4, can be turned such that the holes 18, 22 in the inner and outer plates 16, 20 take up the configuration illustrated in Figure 5.

When a decision is made to alter the configuration of the flame emanating from the burner 2 to a pencil-like configuration, then the carrier tube 12 can again be rotated until the respective holes 18, 22 in the inner and outer plates 16, 20, take up the configuration as illustrated in Figure 6.

It will be evident from the above described embodiment that by providing at least one plate which is rotatable relative to a second plate during use of the oxy-fuel burner 2, then the configuration of the flame emanating from the burner 2 can be altered to any desired configuration.

Further, the holes 18,22 can be of any desired configuration, for example, elongate slots, rectangles or round holes interconnected by relatively small slots so that during relative rotation of the plates 16,20 both the fuel gas and oxygen are never cut off.

## Claims

1. An oxy-fuel burner 2 comprising a body 4 having an inlet 14 for fuel gas and an inlet 24 for oxygen, the body 2 also including at a distal end a nozzle arrangement for the passage therethrough of the gases, the nozzle arrangement including at least two apertured plates 16,20, at least one apertured plate 16 being rotatable relative to the remaining plate(s) 20 for altering the configuration of flame emanating from the burner 2 when in use.

2. An oxy-fuel burner as claimed in Claim 1, in which a carrier tube 12 is located within and mounted for limited rotational movement relative to the body 4, the rotatable apertured plate 16 being connected for rotational movement with the carrier tube 12.

3. An oxy-fuel burner as claimed in Claim 1 or 2, in which a non-rotational apertured plate 20 is rigidly connected to the distal end of the body.

4. An oxy-fuel burner as claimed in Claim 1, 2 or 3 in which the body 4 is provided with a coolant jacket 6 for the flow therethrough of a coolant.
